# EUROPEAN PATENT APPLICATION

(11) **EP 4 174 441 A1**
(43) Date of publication of application: **03.05.2023**
(21) Application number: 21834115.4
(22) Date of filing: 31.05.2021
(51) Int. Cl.: G01C 21/34

(54) **ROUTE PLANNING METHOD AND DEVICE AND COMPUTER-READABLE STORAGE MEDIUM**

(30) Priority: 28.06.2020 CN 202010599970
(71) Applicant: ZTE Corporation, Shenzhen, Guangdong 518057 (CN)
(72) Inventor: ZHOU, Gongcai, Shenzhen, Guangdong 518057 (CN); ZENG, Gang, Shenzhen, Guangdong 518057 (CN)
(74) Representative: Osterhoff, Utz
(86) International application number: PCT/CN2021/097397
(87) International publication number: WO 2022/001545

(57) **Abstract**

Disclosed are a route planning method, a route planning device (100, 200), and a computer-readable storage medium, which relates to the technical field of positioning. The route planning method includes: adjusting an alternative route to generate a corresponding safe route in response that an area passed by the alternative route is unsafe, the safe route bypassing the area (S301); the area being unsafe includes that the area is a risk area, and/or there is risk person in the area.

## Description

### CROSS-REFERENCE TO RELATED APPLICATIONS

This application claims priority to Chinese Patent Application No. 202010599970.3, filed on June 28, 2020, the entire contents of which are incorporated herein by reference.

### TECHNICAL FIELD

Embodiments of the present application relate to the technical field of positioning, and in particular to a route planning method, a route planning device, and a computer-readable storage medium.

### BACKGROUND

Nowadays, when planning a route, a map is usually called to determine the appropriate route based on the departure and destination input by the user. Or, the user's current position is located by a positioning tool such as a global positioning system (GPS), and a suitable route is determined by calling a map according to the destination input by the user. The user moves according to the determined route. If there is a dangerous situation, such as a crime on the route, or a source of virus infection, for example, during the coronavirus epidemic, if the route passes through the community where the coronavirus occurred, the user needs to re-plan the route to avoid risks, otherwise the user may be in danger. Therefore, how to plan routes more intelligently to avoid risks has become an urgent problem to be solved.

### SUMMARY

Embodiments of the present application provide a route planning method, including: adjusting an alternative route to generate a corresponding safe route in response that an area passed by the alternative route is unsafe, the safe route bypassing the area; the area being unsafe includes that the area is a risk area, and/or there is risk person in the area.

Embodiments of the present application further provide a route planning device, including: a memory configured to store a computer program; and a processor, the processor is configured to execute the computer program and implement the route planning method as described above when executing the computer program.

Embodiments of the present application further provide a computer-readable storage medium storing a computer program, when the computer program is executed by a processor, the processor implements the route planning method as described above.

### BRIEF DESCRIPTION OF THE DRAWINGS

FIG. 1 is a schematic diagram of functional modules of a route planning device according to an embodiment of the present application.
FIG. 2 is a schematic block diagram of a route planning device according to an embodiment of the present application.
FIG. 3 is a schematic flowchart of operations of a route planning method according to an embodiment of the present application.
FIG. 4 is a schematic diagram of determining a position of a target dangerous person according to an embodiment of the present application.
FIG. 5 is a schematic diagram of a first action trajectory of a target dangerous person according to an embodiment of the present application.
FIG. 6 is a schematic diagram of a risk area according to an embodiment of the present application.
FIG. 7 is a schematic diagram of intersection of a first action trajectory and a second action trajectory according to an embodiment of the present application.

### DETAILED DESCRIPTION OF THE EMBODIMENTS

The technical solutions in the embodiments of the present application will be clearly and completely described below in conjunction with the drawings in the embodiments of the present application. Apparently, the described embodiments are some embodiments of the present application, but not all of them. Based on the embodiments in this application, all other embodiments obtained by persons of ordinary skill in the art without making creative efforts belong to the scope of the present application.

The flowcharts shown in the drawings are just illustrations, and do not necessarily include all contents and operations/steps, nor must they be performed in the order described. For example, some operations/steps can be decomposed, combined or partly combined, so the actual order of execution may be changed according to the actual situation.

It should be understood that the terms used in the specification of the present application are for the purpose of describing specific embodiments only and are not intended to limit the present application. As used in this specification and the appended claims, the singular forms "a", "an" and "the" are intended to include plural referents unless the context clearly dictates otherwise.

It should also be understood that the term "and/or" used in the description of the present application and the appended claims refers to any combination and all possible combinations of one or more of the associated listed items, and includes these combinations.

It should be understood that the specific embodiments described herein are only used to explain the present application, and are not intended to limit the present application.

In the following description, the use of suffixes such as "module", "component" or "unit" used to represent elements is only for facilitating the description of the embodiments of the present application, and has no special meaning by itself. Therefore, "module", "component" or "unit" may be used in combination.

Embodiments of the present application provide a route planning method, a route planning device, and a computer-readable storage medium. The route planning method can be applied to the route planning device to realize that when the area passed by the alternative route is not safe, the alternative route is adjusted to generate a corresponding safe route, and the safe route bypasses the area. The area being unsafe includes that the area is a risk area, and/or there is risk person in the area, so that routes can be planned more intelligently and risks can be avoided.

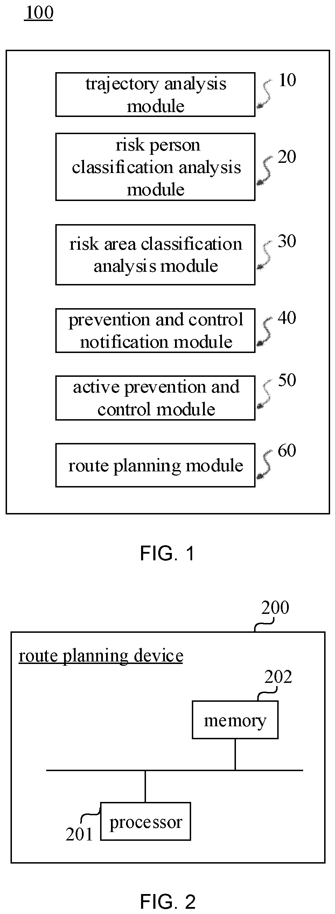

As shown in FIG. 1, FIG. 1 is a schematic diagram of functional modules of a route planning device according to an embodiment of the present application. The route planning device 100 includes a trajectory analysis module 10, a risk person classification analysis module 20, a risk area classification analysis module 30, a prevention and control notification module 40, an active prevention and control module 50 and a route planning module 60.

A base station is an interface device for a mobile terminal (such as a smartphone) to access a mobile network, and is a form of a radio station, that is, in a certain radio coverage area, through the mobile communication switching center, the radio transceiver station that transmits information to and from the mobile terminal. The main function of the base station is to provide wireless coverage and realize wireless signal transmission between the wired communication network and the wireless terminal.

A base station cell refers to an area covered by a base station or a part of a base station in a cellular mobile communication system, in which a mobile terminal can reliably communicate with a base station through a wireless channel. Each base station consists of one or more base station cells.

When using a mobile terminal to make calls, send text messages, surf the Internet, or the like, the mobile terminal will access the base station cell, and the network device will record the information of each base station cell. The information of the base station cell includes the position of the base station cell, the field strength information of the base station cell, the time when the mobile terminal accesses the base station cell, the field strength information of the mobile terminal, and the like.

The trajectory analysis module 10 is configured to extract from the database the information of multiple base station cells accessed by the mobile terminal according to the mobile terminal number of the determined target dangerous person, calculate the position of the target dangerous person according to the adjacent cell and field strength information contained in the information of each base station cell, project the position of the target dangerous person onto the nearest route on the map, and then use the Lagrangian interpolation algorithm to interpolate the position of the route to obtain the action trajectory of the target dangerous person.

The risk person classification analysis module 20 is configured to find the person to be evaluated from the history of the target dangerous person and the current base station cell, call the trajectory analysis module 10 for each person to be evaluated to calculate the action trajectory, and then determine whether the action trajectory intersects with the action trajectory of the target dangerous person. If the time difference between certain points on the two trajectories is within a range, and/or the distance difference is within a range, the person is identified as a high-risk person. Medium-risk persons are either farther from the standard of high-risk persons in time or farther in distance; low-risk persons are farther in time and/or distance than medium-risk persons; and no-risk persons are farther in time and/or distance than low-risk persons.

The risk area classification analysis module 30 is configured to analyze the risk source, that is, the risk level of the area where the action trajectory of the target dangerous person is located. According to the chronological order of each point on the action trajectory of the target dangerous person, the earlier the time, the smaller the radius; the later the time, the larger the radius. High-risk areas are identified based on the radius. After determining the high-risk area, extend a certain distance from the boundary of the high-risk area, and this area is a medium-risk area. The low-risk area extends outward for a certain distance from the boundary of the medium-risk area. The risk-free area is the area outside the boundary of the low-risk area.

The prevention and control notification module 40 sends warning information to the high, medium and low risk groups analyzed by the risk person classification analysis module 20, and sends the warning information to the high, medium and low risk groups analyzed by the risk area classification analysis module 30.

The route planning module 60 is configured to determine a risk-free route through the departure and the destination. Firstly, an alternative route is calculated based on the departure and the destination, combined with the map, for example, the shortest route between the departure and the destination is determined as the alternative route. Then, according to the alternative route, check whether the passed area is a risk area, and/or whether there is a risk person in the passed area, and if it is a risk area, or if there is a risk person, the alternate route is adjusted to both sides. When the areas passed by the adjusted route are all safe areas, the adjusted route is determined as a safe route.

As shown in FIG. 2, FIG. 2 is a schematic block diagram of a route planning device according to an embodiment of the present application. The route planning device 200 includes a processor 201 and a memory 202, and the processor 201 and the memory 202 are connected through a bus.

The memory 202 may include a non-volatile storage medium and an internal memory.

The non-volatile storage medium can store an operating system and a computer program. The computer program includes program instructions. When the program instructions are executed, the processor can be made to execute any route planning method.

The processor 201 is configured to provide computing and control capabilities to support the operation of the entire terminal device.

The internal memory provides an environment for the operation of computer programs in non-volatile storage medium. When the computer program is executed by the processor, the processor can be made to execute any route planning method.

It can be understood that the structure shown in FIG. 2 is only a block diagram of a partial structure related to the embodiment of the present application, and does not constitute a limitation on the route planning device to which the embodiment of the present application is applied. A particular route planning device may include more or fewer components than shown in the figure, or a combination of some components, or differently arranged components shown in the figure.

It should be understood that the processor 201 may be a central processing unit (CPU). The processor may also be other general-purpose processors, digital signal processors (DSP), application-specific integrated circuits (ASIC), field programmable gate arrays (FPGA) or other programmable logic devices, discrete gate or transistor logic devices, discrete hardware components, and the like. A general-purpose processor may be a microprocessor, or the processor may be any conventional processor, or the like.

In some embodiments, the processor is configured to run the computer program stored in the memory to realize the following operations.

An alternative route is adjusted to generate a corresponding safe route in response that an area passed by the alternative route is unsafe, the safe route bypasses the area, the area being unsafe includes that the area is a risk area, and/or there is risk person in the area.

In some embodiments, before realizing that the alternative route is adjusted to generate the corresponding safe route in response that the area passed by the alternative route is unsafe, the processor is further configured to determine a first action trajectory of a target dangerous person according to information of multiple base station cells accessed by a mobile terminal of the target dangerous person; and determine a risk area and/or risk person according to the first action trajectory, the risk area includes risk areas of multiple different risk levels, and the risk person includes risk person of multiple different risk levels.

In some embodiments, when determining the first action trajectory of the target dangerous person according to information of multiple base station cells accessed by the mobile terminal of the target dangerous person, the processor is configured to determine multiple positions of the target dangerous person at multiple different time points according to the information of the multiple base station cells; and generate the first action trajectory according to the multiple positions.

In some embodiments, when determining multiple positions of the target dangerous person at multiple different time points according to the information of the multiple base station cells, the processor is configured to obtain a radius of each base station cell and a radius of at least one neighboring cell of each base station cell; determine an intersection area of each base station cell and the at least one neighboring cell according to the radius of each base station cell and the radius of the at least one neighboring cell; and determine the position of the target dangerous person according to the intersecting area.

In some embodiments, when generating the first action trajectory according to the multiple positions, the processor is configured to select a regular route in a map according to the multiple positions and map information; and vertically project the multiple positions onto the regular route, and insert multiple points on the regular route to generate the first action trajectory, each point on the first action trajectory includes position information and time information.

In some embodiments, when determining the risk area according to the first action trajectory, the processor is configured to determine a radius of a diffusion area with each point as the center according to the time information corresponding to each point on the first action trajectory, and the further the time goes, the smaller the radius of the diffusion area; determine a high-risk area according to the radius of the diffusion area corresponding to each point; determine an area extending outward a first distance based on a boundary of the high-risk area as a medium-risk area; determine an area extending outward a second distance based on a boundary of the medium-risk area as a low-risk area; and determine an area extending outward based on a boundary of the low-risk area as a risk-free area.

In some embodiments, after determining the risk area according to the first action trajectory, the processor is further configured to send warning information to person in the risk area, the warning information sent to the risk areas corresponding to different risk levels are different.

In some embodiments, after determining the risk area according to the first action trajectory, the processor is further configured to send warning information to floating person in response to detecting that the floating person is moving towards the risk area.

In some embodiments, the processor is further configured to in response to detecting that the target dangerous person is moving, send warning information to a target cell currently accessed by the mobile terminal of the target dangerous person and to person in at least one neighboring cell of the target cell.

In some embodiments, before determining the risk person according to the first action trajectory, the processor is further configured to determine each base station cell accessed by the mobile terminal of the target dangerous person and persons to be evaluated existing in at least one adjacent cell; and determine a second action trajectory of each person to be evaluated according to the information of multiple base station cells accessed by the mobile terminal of each person to be evaluated.

When determining the risk person according to the first action trajectory, the processor is configured to compare the first action trajectory with the second action trajectory of each person to be evaluated to determine whether each person to be evaluated is the risk person.

In some embodiments, when comparing the first action trajectory with the second action trajectory of each person to be evaluated to determine whether each person to be evaluated is the risk person, the processor is configured to: if a distance between a first point on the first action trajectory and a second point on the second action trajectory of a current person to be evaluated is within a first preset distance range, and/or a time difference corresponding to the first point and the second point is within a first preset time range, determine that the current person to be evaluated is a high-risk person; if the distance between the first point and the second point is within a second preset distance range, and/or the time difference corresponding to the first point and the second point is within a second preset time range, determine that the current person to be evaluated is a medium-risk person; if the distance between the first point and the second point is within a third preset distance range, and/or the time difference corresponding to the first point and the second point is within a third preset time range, determine that the current person to be evaluated is a low-risk person; if the distance between the first point and the second point is within a fourth preset distance range, and/or the time difference corresponding to the first point and the second point is within a fourth preset time range, determine that the current person to be evaluated is a risk-free person; distance values corresponding to the first preset distance range, the second preset distance range, the third preset distance range, and the fourth preset distance range increase sequentially, and time values corresponding to the first preset time range, the second preset time range, the third preset time range, and the fourth preset time range increase sequentially.

In some embodiments, after determining the risk person according to the first action trajectory, the processor is further configured to send warning information to the risk person, the warning information sent to the risk person corresponding to different risk levels are different.

For ease of understanding, the route planning method provided by the embodiment of the present application will be described in detail below in conjunction with the route planning device shown in FIG. 1 and FIG. 2. It should be noted that the above-mentioned route planning device does not limit the application scenarios of the route planning method provided in the embodiment of the present application.

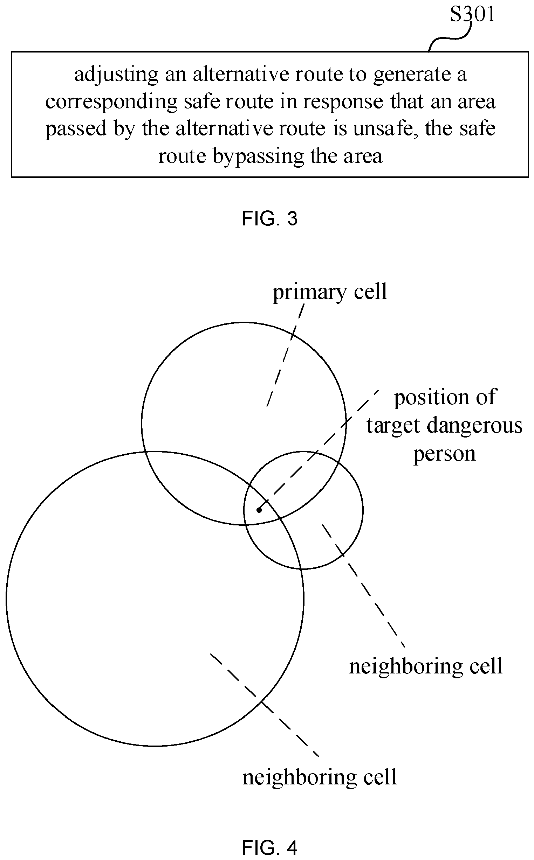

As shown in FIG. 3, FIG. 3 is a schematic flowchart of operations of a route planning method according to an embodiment of the present application. The method can be used in the above-mentioned route planning device, so as to plan routes more intelligently, thereby avoiding risks.

As shown in FIG. 3, the method includes operation S301.

S301, adjusting an alternative route to generate a corresponding safe route in response that an area passed by the alternative route is unsafe, the safe route bypasses the unsafe area.

In an exemplary embodiment, by obtaining the departure and the destination input by the current person, firstly, an alternative route is calculated based on the departure and the destination in combination with the map, for example, the shortest route between the departure and the destination is determined as the alternative route.

Or, by locating the position of the current person and the destination input by the current person, an alternative route is calculated according to the position of the current person and the destination in combination with the map.

Afterwards, according to the alternative route, it is detected whether the area passed by the alternative route is unsafe. The area being unsafe includes that the area is a risk area, and/or there is risk person or dangerous person in the area.

The risk area means that there may be dangers in this area, for example, there is a risk of virus-infected people in this area. Risk person refers to the person who may be in danger, for example, the person is at risk of being infected by a virus. The dangerous person is a person who is clearly dangerous, such as a virus-infected person.

If the area passed by the alternative route is a risk area, or there are risk people in the area passed by the alternative route, the alternative route will be adjusted. For example, the alternative route is adjusted to both sides to generate a corresponding safe route, and the safe route bypasses the unsafe area that the alternative route passes through.

Afterwards, when person move based on the safe route, risks can be avoided without requiring person to re-plan the route in person, which is not only safe but also efficient, thus greatly improving the user experience. That is to say, it realizes rapid route planning, bypasses risk areas, risk person and dangerous person, and achieves the purpose of safe flow of person.

In some embodiments, before adjusting the alternative route to generate the corresponding safe route in response that the area passed by the alternative route is unsafe, the route planning method includes: determining a first action trajectory of a target dangerous person according to information of multiple base station cells accessed by a mobile terminal of the target dangerous person; and determining the risk area and/or the risk person according to the first action trajectory, the risk area includes risk areas of multiple different risk levels, and the risk person includes risk person of multiple different risk levels.

Before route planning, the risk area and the risk person are identified. Exemplarily, through the determined target dangerous person, such as a virus-infected person, first, based on the mobile terminal of the target dangerous person, such as the phone number of a smart phone, it is possible to query and obtain the information of multiple base station cells accessed by the mobile terminal from the corresponding database. For example, it is possible to query the access records of multiple base station cells of the mobile terminal from a certain start time to the current time, obtain the corresponding information of multiple base station cells, and sort according to the access time sequence. The information of the base station cell includes the position of the base station cell, the field strength information of the base station cell, the time when the mobile terminal accesses the base station cell, the field strength information of the mobile terminal, and the like.

In some embodiments, the determining the first action trajectory of the target dangerous person according to the information of multiple base station cells accessed by the mobile terminal of the target dangerous person includes: determining multiple positions of the target dangerous person at multiple different time points according to the information of the multiple base station cells; and generating the first action trajectory according to the multiple positions.

Since the position of the mobile terminal of the target dangerous person maps the position of the target dangerous person, according to the information of multiple base station cells accessed by the mobile terminal, the position of the mobile terminal at which point in time is determined, and the corresponding positions of the target dangerous person at multiple different time points can be determined. According to these positions and the time points corresponding to these positions, the action trajectory of the target dangerous person is determined. For ease of description, the action trajectory of the target dangerous person is referred to as the first action trajectory hereinafter.

In some embodiments, the determining multiple positions of the target dangerous person at multiple different time points according to the information of the multiple base station cells includes: obtaining a radius of each base station cell and a radius of at least one neighboring cell of each base station cell; determining an intersection area of each base station cell and the at least one neighboring cell according to the radius of each base station cell and the radius of the at least one neighboring cell; and determining the position of the target dangerous person according to the intersecting area.

A certain base station cell among multiple base station cells accessed by the mobile terminal of the target dangerous person is taken as an example. As shown in FIG. 4, the base station cell is used as the primary cell, and the radius of the primary cell and the radius of at least one adjacent cell of the primary cell are determined according to the field strength information of the primary cell and at least one adjacent cell of the primary cell. According to the radius of the primary cell and the radius of at least one adjacent area of the primary cell, the intersection area of the primary cell and the at least one adjacent area of the primary cell is determined, and the position of the target dangerous person is determined based on the intersection area. For example, the center position of the intersection area is determined as the position of the target dangerous person.

In an exemplary embodiment, if the primary cell information only includes field strength information of the mobile terminal, the radius of the mobile terminal is calculated by the field strength of the mobile terminal, and then combined with the direction angle of the base station, the position of the mobile terminal in the fan arc is determined, and this position is determined as the position of the target dangerous person.

In an exemplary embodiment, if the primary cell information does not include neighbor cell information or field strength information, the position of the mobile terminal in the fan arc is determined according to the position of the base station corresponding to the primary cell, the radius of the primary cell, and the direction angle of the primary cell, and the position is determined as the position of the target dangerous person.

In some embodiments, the generating the first action trajectory according to the multiple positions includes: selecting a regular route in a map according to the multiple positions and map information; and vertically projecting the multiple positions onto the regular route, and inserting multiple points on the regular route to generate the first action trajectory, each point on the first action trajectory includes position information and time information.

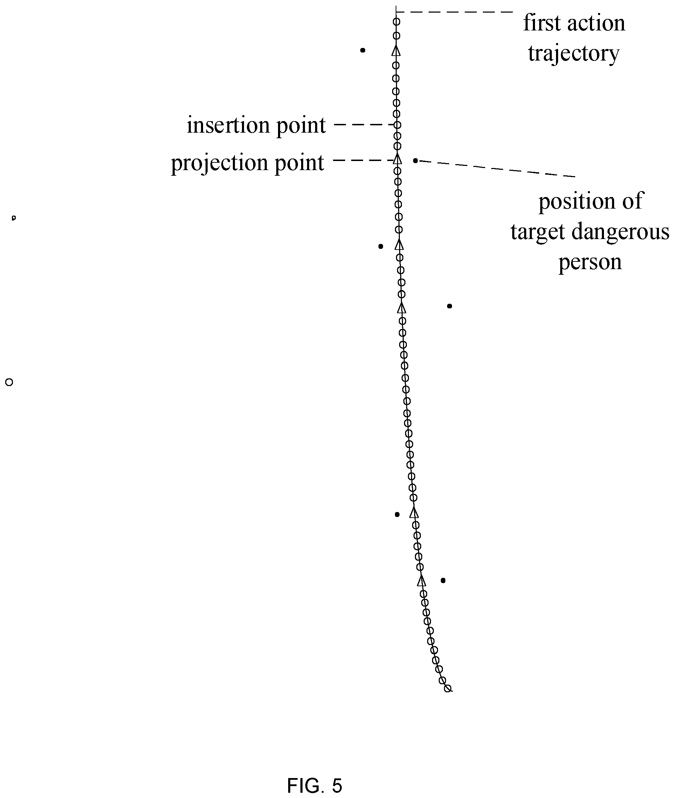

As shown in FIG. 5, after determining the corresponding positions of the target dangerous person at multiple different time points, a regular route in the map is firstly selected according to the multiple positions of the target dangerous person and the map information. For example, a regular route closest to multiple positions of the target dangerous person is selected, fine-tuning is performed on the multiple positions of the target dangerous person, and the multiple positions of the target dangerous person are vertically projected onto the regular route.

Lagrangian interpolation is used to interpolate multiple points on the regular route. Based on the vertical projection of multiple positions of the target dangerous person to the projection points on the regular route and the inserted multiple insertion points, a first action trajectory of the target dangerous person is generated. Each point on the first action trajectory includes position information and time information.

In some embodiments, the determining the risk area according to the first action trajectory includes: determining a radius of a diffusion area with each point as the center according to the time information corresponding to each point on the first action trajectory, and the further the time goes, the smaller the radius of the diffusion area; determining a high-risk area according to the radius of the diffusion area corresponding to each point; determining an area extending outward a first distance based on a boundary of the high-risk area as a medium-risk area; determining an area extending outward a second distance based on a boundary of the medium-risk area as a low-risk area; and determining an area extending outward based on a boundary of the low-risk area as a risk-free area.

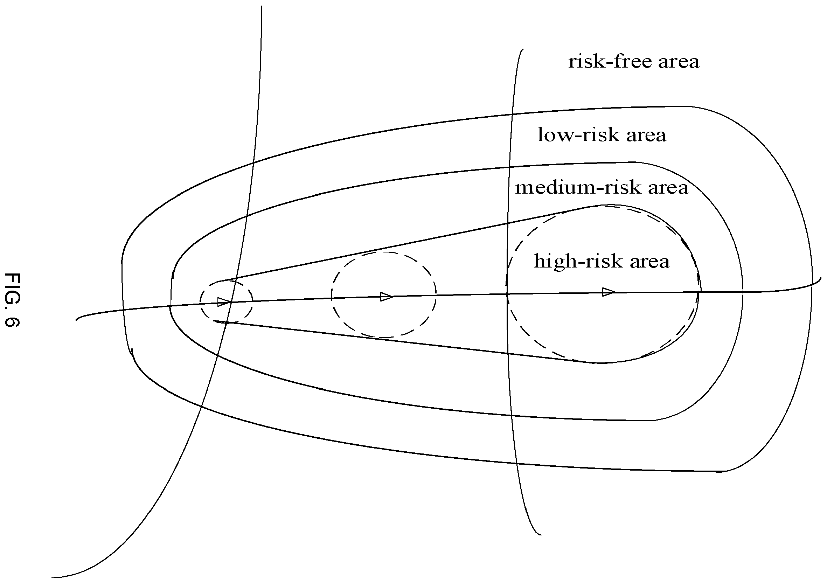

As shown in FIG. 6, according to the time information corresponding to each point on the first action trajectory of the target dangerous person, in chronological order, the earlier the time is, the smaller the radius of the diffusion area of the corresponding point is, that is, the smaller the area of the diffusion area with this point as the center is. On the contrary, the later the time is, the larger the radius of the diffusion area of the corresponding point is, and the larger the area of the diffusion area with the point as the center is. The high-risk area is determined according to the radius of the diffusion area corresponding to each point on the first action trajectory.

After the high-risk area is determined, the boundary of the high-risk area is extended outward for a certain distance, and the area based on the boundary of the high-risk area extending outward for a first distance is determined as a medium-risk area.

Correspondingly, after the medium-risk area is determined, the boundary of the medium-risk area extends outward by a certain distance, and the area extending outward by a second distance based on the boundary of the medium-risk area is determined as a low-risk area. The first distance and the second distance may be the same or different, and the first distance and the second distance may be flexibly set according to actual conditions, and no specific limitation is set herein.

After the low-risk area is determined, the area outside the boundary of the low-risk area is determined as a risk-free area.

In some embodiments, in order to further avoid risks, after determining risk areas with different risk levels such as high-risk areas, medium-risk areas, and low-risk areas, warning information is sent to person in the risk areas. For example, warning information is sent to person in the risk area through various methods such as text messages, telephone calls, and instant messaging.

Different warning information are sent to risk areas with different risk levels. For example, first-level warning information is sent to people in high-risk areas, second-level warning information is sent to people in medium-risk areas, and third-level warning information is sent to people in low-risk areas.

When a danger breaks out, by identifying high-risk areas, medium-risk areas, low-risk areas and other risk areas with different risk levels, the key prevention and control areas can be quickly analyzed. In addition, for key prevention and control areas, warning information is issued to achieve rapid response to danger and control the spread of danger.

In some embodiments, after determining risk areas with different risk levels such as high-risk areas, medium-risk areas, and low-risk areas, when it is detected that a floating person outside the risk area is moving towards the risk area, the warning information will be sent to the floating person. For example, warning information is sent to the floating person through various methods such as text messages, telephone calls, and instant messaging.

In an exemplary embodiment, the current position of the floating person is calculated according to the information of the base station cell currently accessed by the mobile terminal of the floating person, and then the current position of the floating person is compared with the position of the risk area. When the current position of the floating person is less than a certain distance from the risk area, or the current position of the floating person is within a certain risk area, the warning information will be sent to the floating person through SMS, telephone, instant messaging and other methods.

In some embodiments, when the movement of the target dangerous person is detected, warning information is sent to the target cell currently accessed by the mobile terminal of the target dangerous person and to people in at least one neighboring cell of the target cell.

For example, according to the base station cell information currently accessed by the mobile terminal of the target dangerous person and the moving direction of the target dangerous person, the base station cell currently accessed by the mobile terminal of the target dangerous person is taken as the target cell, the target cell and at least one current neighboring cell of the target cell are searched for, warning information is sent to the target cell and all person in at least one current neighboring area of the target cell and the management person of the jurisdiction through various methods such as text messages, telephone calls, and instant messaging.

In some embodiments, before determining the risk person according to the first action trajectory, the route planning method includes: determining each base station cell accessed by the mobile terminal of the target dangerous person and persons to be evaluated existing in at least one adjacent cell; and determining a second action trajectory of each person to be evaluated according to the information of multiple base station cells accessed by the mobile terminal of each person to be evaluated; determining the risk person according to the first action trajectory includes: comparing the first action trajectory with the second action trajectory of each person to be evaluated to determine whether each person to be evaluated is the risk person.

A certain base station cell among multiple base station cells accessed by the mobile terminal of the target dangerous person is taken as an example, the base station cell is used as the primary cell, the persons existing in the primary cell and at least one neighboring cell of the primary cell are determined, and these persons are determined as persons to be evaluated. For each determined person to be evaluated, the action trajectory of each person to be evaluated is determined in the manner of determining the first action trajectory of the target dangerous person. For ease of description, the action trajectory of each person to be evaluated is referred to as the second action trajectory hereinafter. The specific operation process of determining the second action trajectory of each person to be evaluated can refer to the process of determining the first action trajectory of the target dangerous person, which will not be repeated herein.

In some embodiments, the comparing the first action trajectory with the second action trajectory of each person to be evaluated to determine whether each person to be evaluated is the risk person includes: if a distance between a first point on the first action trajectory and a second point on the second action trajectory of a current person to be evaluated is within a first preset distance range, and/or a time difference corresponding to the first point and the second point is within a first preset time range, determining that the current person to be evaluated is a high-risk person; if the distance between the first point and the second point is within a second preset distance range, and/or the time difference corresponding to the first point and the second point is within a second preset time range, determining that the current person to be evaluated is a medium-risk person; if the distance between the first point and the second point is within a third preset distance range, and/or the time difference corresponding to the first point and the second point is within a third preset time range, determining that the current person to be evaluated is a low-risk person; if the distance between the first point and the second point is within a fourth preset distance range, and/or the time difference corresponding to the first point and the second point is within a fourth preset time range, determining that the current person to be evaluated is a risk-free person; distance values corresponding to the first preset distance range, the second preset distance range, the third preset distance range, and the fourth preset distance range increase sequentially, and time values corresponding to the first preset time range, the second preset time range, the third preset time range, and the fourth preset time range increase sequentially.

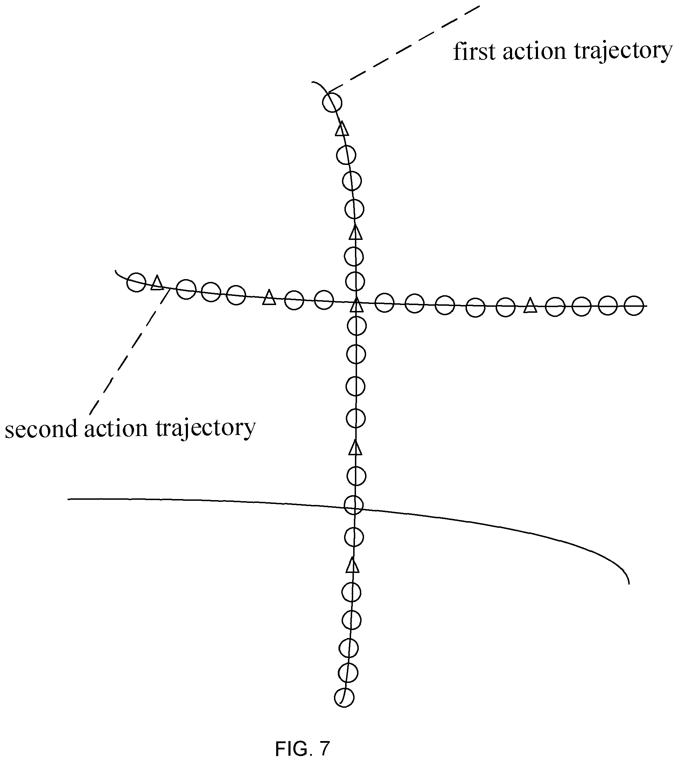

As shown in FIG. 7, the second action trajectory of a person to be evaluated and the first action trajectory of the target dangerous person are taken as an example, the first action trajectory is compared with the second action trajectory, and the intersection of the first action trajectory and the second action trajectory is determined. If the distance between the point on the first action trajectory and the point on the second action trajectory is within the first preset distance range, and/or the time difference corresponding to the point on the first action trajectory and the point on the second action trajectory is within the first preset time range, it is determined that the current person to be evaluated is a high-risk person. For the convenience of description, the point on the first action trajectory is called the first point, and the point on the second action trajectory is called the second point.

For example, the first preset time range is set to 0-2 minutes, the first preset distance range is set to 0-10 meters. If the time difference between the first point and the second point is within 2 minutes, and the distance between the first point and the second point is within 10 meters, it is determined that the person to be evaluated is a high-risk person.

If the distance between the first point and the second point is within the second preset distance range, and/or the time difference corresponding to the first point and the second point is within the second preset time range, it is determined that the current person to be evaluated is a medium-risk person. For example, the second preset time range is set to 2-30 minutes, and the second preset distance range is set to 10-100 meters. If the time difference between the first point and the second point is within 2-30 minutes, and the distance between the first point and the second point is within 10 meters, it is determined that the person to be evaluated is a medium-risk person. Alternatively, if the time difference between the first point and the second point is within 2 minutes, and the distance between the first point and the second point is within 10-100 meters, it is determined that the person to be evaluated is a medium-risk person.

If the distance between the first point and the second point is within the third preset distance range, and/or the time difference corresponding to the first point and the second point is within the third preset time range, it is determined that the current person to be evaluated is a low-risk person. For example, the third preset time range is set to 30 minutes to 24 hours, the third preset distance range is set to 100-1000 meters. If the time difference between the first point and the second point is within 30 minutes to 24 hours, and the distance between the first point and the second point is within 100-1000 meters, then the person to be evaluated is determined to be a low-risk person.

If the distance between the first point and the second point is within the fourth preset distance range, and/or the time difference corresponding to the first point and the second point is within the fourth preset time range, it is determined that the current person to be evaluated is a risk-free person. For example, the third preset time range is set to exceed 24 hours, the third preset distance range is set to exceed 1000 meters. If the time difference between the first point and the second point exceeds 24 hours, and the distance between the first point and the second point exceeds 1000 meters, it is determined that the person to be evaluated is a risk-free person.

In some embodiments, after identifying risk persons with different risk levels such as high-risk persons, medium-risk persons, and low-risk persons, warning information is sent to the risk person. For example, the warning information is sent to risk person through various methods such as text messages, telephone calls, and instant messaging.

Different warning information are sent to risk person with different risk levels. For example, red warning information is sent to high-risk person, orange warning information is sent to medium-risk person, and yellow warning information is sent to low-risk person.

In the above embodiments, by detecting the alternative route, when the area passed by the alternative route is unsafe, for example, the area passed by the alternative route is a risk area, and/or there is risk person in the area passed by the alternative route, the alternative route is adjusted to generate a corresponding safe route. The safe route bypasses the unsafe area. When moving based on the safe route, risks can be avoided, and the operation of re-planning the route by person is omitted, which not only ensures the safety of person, but also is fast and efficient. Therefore, more intelligent route planning is realized, thereby avoiding risks.

Embodiments of the present application further provide a computer-readable storage medium. The computer-readable storage medium stores a computer program. The computer program includes program instructions, and the processor executes the program instructions to implement any route planning method provided in the embodiments of the present application.

For example, the computer program is loaded by the processor and may perform the following operations: adjusting an alternative route to generate a corresponding safe route in response that an area passed by the alternative route is unsafe, the safe route bypassing the area; the area being unsafe includes that the area is a risk area, and/or there is risk person in the area.

The computer-readable storage medium may be an internal storage unit of the route planning device in the foregoing embodiments, such as a hard disk or memory of the route planning device. The computer-readable storage medium can also be an external storage device of the route planning device, such as a plug-in hard disk equipped on the route planning device, a smart memory card (SMC), a secure digital (SD) card, a flash card, or the like.

The above embodiments are only some specific embodiments of the present application, but the scope of the present application is not limited thereto. Any person familiar with the technical field can easily think of various equivalent modifications or replacements within the technical scope disclosed in the present application, and these modifications or replacements should all be covered within the scope of the present application. Therefore, the scope of the present application should be based on the scope of the claims.

## Claims

1. A route planning method, **characterized by** comprising:
adjusting an alternative route to generate a corresponding safe route in response that an area passed by the alternative route is unsafe, the safe route bypassing the area;
wherein the area being unsafe comprises that the area is a risk area, and/or there is risk person in the area.

2. The route planning method according to claim 1, wherein before adjusting the alternative route to generate the corresponding safe route in response that the area passed by the alternative route is unsafe, the route planning method comprises:
determining a first action trajectory of a target dangerous person according to information of multiple base station cells accessed by a mobile terminal of the target dangerous person; and
determining the risk area and/or the risk person according to the first action trajectory, wherein the risk area comprises risk areas of multiple different risk levels, and the risk person comprises risk person of multiple different risk levels.

3. The route planning method according to claim 2, wherein the determining the first action trajectory of the target dangerous person according to the information of multiple base station cells accessed by the mobile terminal of the target dangerous person comprises:
determining multiple positions of the target dangerous person at multiple different time points according to the information of the multiple base station cells; and
generating the first action trajectory according to the multiple positions.

4. The route planning method according to claim 3, wherein the determining multiple positions of the target dangerous person at multiple different time points according to the information of the multiple base station cells comprises:
obtaining a radius of each base station cell and a radius of at least one neighboring cell of each base station cell;
determining an intersection area of each base station cell and the at least one neighboring cell according to the radius of each base station cell and the radius of the at least one neighboring cell; and
determining the position of the target dangerous person according to the intersecting area.

5. The route planning method according to claim 3, wherein the generating the first action trajectory according to the multiple positions comprises:
selecting a regular route in a map according to the multiple positions and map information; and
vertically projecting the multiple positions onto the regular route, and inserting multiple points on the regular route to generate the first action trajectory, wherein each point on the first action trajectory comprises position information and time information.

6. The route planning method according to claim 5, wherein the determining the risk area according to the first action trajectory comprises:
determining a radius of a diffusion area with each point as the center according to the time information corresponding to each point on the first action trajectory, and the further the time goes, the smaller the radius of the diffusion area;
determining a high-risk area according to the radius of the diffusion area corresponding to each point;
determining an area extending outward a first distance based on a boundary of the high-risk area as a medium-risk area;
determining an area extending outward a second distance based on a boundary of the medium-risk area as a low-risk area; and
determining an area extending outward based on a boundary of the low-risk area as a risk-free area.

7. The route planning method according to claim 2, wherein after determining the risk area according to the first action trajectory, the route planning method comprises:
sending warning information to person in the risk area, wherein the warning information sent to the risk areas corresponding to different risk levels are different.

8. The route planning method according to claim 2, wherein after determining the risk area according to the first action trajectory, the route planning method comprises:
sending warning information to floating person in response to detecting that the floating person is moving towards the risk area.

9. The route planning method according to claim 2, further comprising:
in response to detecting that the target dangerous person is moving, sending warning information to a target cell currently accessed by the mobile terminal of the target dangerous person and to person in at least one neighboring cell of the target cell.

10. The route planning method according to claim 5, wherein before determining the risk person according to the first action trajectory, the route planning method comprises:
determining each base station cell accessed by the mobile terminal of the target dangerous person and persons to be evaluated existing in at least one adjacent cell; and
determining a second action trajectory of each person to be evaluated according to the information of multiple base station cells accessed by the mobile terminal of each person to be evaluated;
determining the risk person according to the first action trajectory comprises:
comparing the first action trajectory with the second action trajectory of each person to be evaluated to determine whether each person to be evaluated is the risk person.

11. The route planning method according to claim 10, wherein the comparing the first action trajectory with the second action trajectory of each person to be evaluated to determine whether each person to be evaluated is the risk person comprises:
in response that a distance between a first point on the first action trajectory and a second point on the second action trajectory of a current person to be evaluated is within a first preset distance range, and/or a time difference corresponding to the first point and the second point is within a first preset time range, determining that the current person to be evaluated is a high-risk person;
in response that the distance between the first point and the second point is within a second preset distance range, and/or the time difference corresponding to the first point and the second point is within a second preset time range, determining that the current person to be evaluated is a medium-risk person;
in response that the distance between the first point and the second point is within a third preset distance range, and/or the time difference corresponding to the first point and the second point is within a third preset time range, determining that the current person to be evaluated is a low-risk person;
in response that the distance between the first point and the second point is within a fourth preset distance range, and/or the time difference corresponding to the first point and the second point is within a fourth preset time range, determining that the current person to be evaluated is a risk-free person;
wherein distance values corresponding to the first preset distance range, the second preset distance range, the third preset distance range, and the fourth preset distance range increase sequentially, and time values corresponding to the first preset time range, the second preset time range, the third preset time range, and the fourth preset time range increase sequentially.

12. The route planning method according to claim 2, wherein after determining the risk person according to the first action trajectory, the route planning method comprises:
sending warning information to the risk person, wherein the warning information sent to the risk person corresponding to different risk levels are different.

13. A route planning device, **characterized by** comprising:
a memory configured to store a computer program; and
a processor, wherein the processor is configured to execute the computer program and implement the route planning method according to any one of claims 1 to 12 when executing the computer program.

14. A computer-readable storage medium, **characterized in that**, a computer program is stored on the computer-readable storage medium, and when the computer program is executed by a processor, the processor implements the route planning method according to any one of claims 1 to 12.
